# EUROPEAN PATENT SPECIFICATION

(11) **EP 4 550 082 B1**
(45) Date of publication and mention of the grant of the patent: **29.07.2026**
(21) Application number: 23850233.0
(22) Date of filing: 12.06.2023
(51) Int. Cl.: G06F 1/16, H01M 50/284, H04M 1/02, G06F 1/18, H01M 50/202, H01M 50/247

(54) **ELECTRONIC DEVICE INCLUDING TAPES SURROUNDING BATTERY**
ELEKTRONISCHE VORRICHTUNG MIT BATTERIEUMHÜLLENDEN BÄNDERN
DISPOSITIF ÉLECTRONIQUE COMPRENANT DES BANDES ENTOURANT UNE BATTERIE

(30) Priority: 03.08.2022 KR 20220097020; 09.08.2022 KR 20220099562
(43) Date of publication of application: 07.05.2025
(73) Proprietor: Samsung Electronics Co., Ltd., Suwon-si, Gyeonggi-do 16677 (KR)
(72) Inventor: CHUN, Woosung, Suwon-si, Gyeonggi-do 16677 (KR); CHO, Sujin, Suwon-si, Gyeonggi-do 16677 (KR); KIM, Kunhee, Suwon-si, Gyeonggi-do 16677 (KR); LEE, Sukhyun, Suwon-si, Gyeonggi-do 16677 (KR); HONG, Hyunju, Suwon-si, Gyeonggi-do 16677 (KR)
(74) Representative: HGF
(86) International application number: PCT/KR2023/008012
(87) International publication number: WO 2024/029723

(56) References cited:
- EP-A1- 3 700 177
- CN-U- 211 210 044
- KR-A- 20150 088 601
- KR-A- 20190 029 215
- KR-A- 20200 101 310
- KR-A- 20200 101 791
- US-A1- 2020 220 227

## Description

### [Technical Field]

The present disclosure relates to an electronic device including tapes surrounding a battery.

### [Background Art]

An electronic device may include electronic components to provide a various function to a user. The electronic device may include a battery for supplying power to the electronic components. As the electronic device is miniaturized to enhance portability, the battery and a portion of the electronic components may be disposed adjacent to each other in the electronic device.

EP 3700177A1 discloses, according to its abstract, an electronic device. The electronic device includes a foldable housing configured to include a hinge structure, a first housing structure that has a first face that is connected to the hinge structure and is directed in a first direction, a second face that is directed in a second direction opposite to the first direction, and a first lateral member that at least partly surrounds a space between the first face and the second face, and a second housing structure that has a third face that is connected to the hinge structure and is directed in a third direction, a fourth face that is directed in a fourth direction opposite to the third direction, a second lateral member that at least partly surrounds a space between the third face and the fourth face, and that is folded about the hinge structure onto the first housing structure, a flexible display, a first magnet a second magnet and at least one electrical path.

US 2020220227A1 discloses, according to its abstract, an electronic device. The electronic device includes a housing, a main circuit board, a battery, a battery protection module disposed on one side surface of the battery, a protective holder that surrounds at least part of the battery protection module, and a flexible printed circuit board that extends from one side surface of the battery protection module and that is connected to the main circuit board. The flexible printed circuit board includes a first portion extending from the battery protection module in a second direction perpendicular to a first direction toward the main circuit board, a second portion extending from the first portion while being bent, a third portion extending from the second portion in a third direction opposite to the second direction, a fourth portion extending from the third portion in the first direction, and a connector connected to an end portion of the fourth portion and connected to the main circuit board.

### [Disclosure]

### [Technical Solution]

The scope of the present invention is determined according to the independent claim. Various embodiments of the present invention are outlined in the dependent claims.

### [Description of the Drawings]

FIG. 1 is a block diagram of an electronic device in a network environment according to various embodiments.
FIG. 2A illustrates an example of an unfolding state of an exemplary electronic device according to an embodiment.
FIG. 2B illustrates an example of a folding state of an exemplary electronic device according to an embodiment.
FIG. 2C is an exploded view of an exemplary electronic device according to an embodiment.
FIG. 3A is a top plan view of an exemplary electronic device according to an embodiment.
FIG. 3B is a cross-sectional view illustrating an example of an exemplary electronic device cut along line A-A' of FIG. 3A, according to an embodiment.
FIG. 4A is a cross-sectional view illustrating an example of an exemplary electronic device cut along line B-B' of FIG. 3A, according to an embodiment.
FIG. 4B is a perspective view illustrating a portion of a battery of an exemplary electronic device according to an embodiment.
FIG. 4C is a cross-sectional view illustrating an example of a battery of an exemplary electronic device cut along line C-C' of FIG. 4B, according to an embodiment.
FIG. 5A is a top plan view of an exemplary electronic device according to an embodiment.
FIG. 5B is a cross-sectional view illustrating an example of an exemplary electronic device cut along line D-D' of FIG. 5A according to an embodiment.
FIG. 6A is a top plan view of an exemplary electronic device according to an embodiment.
FIG. 6B is a cross-sectional view illustrating an example of an antenna module of an exemplary electronic device cut along E-E' of FIG. 6A, according to an embodiment.

### [Mode for Invention]

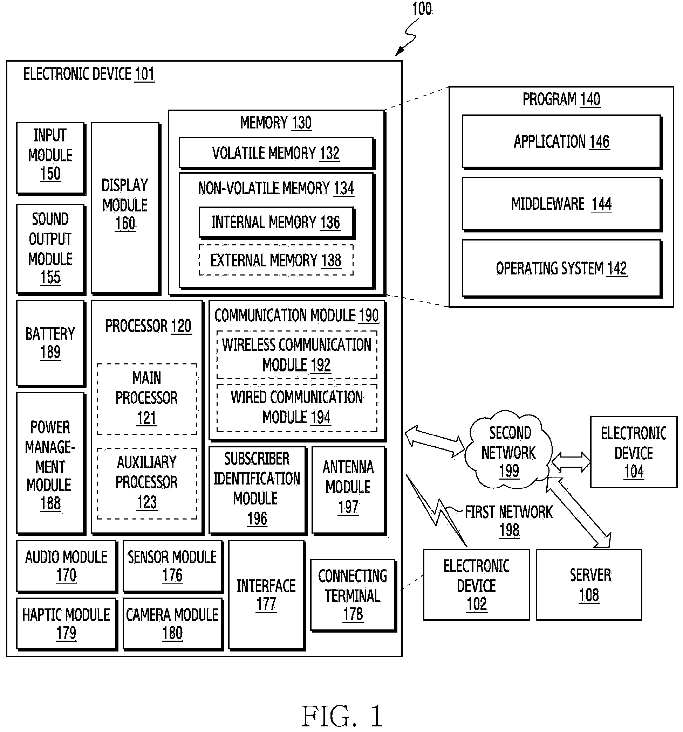

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

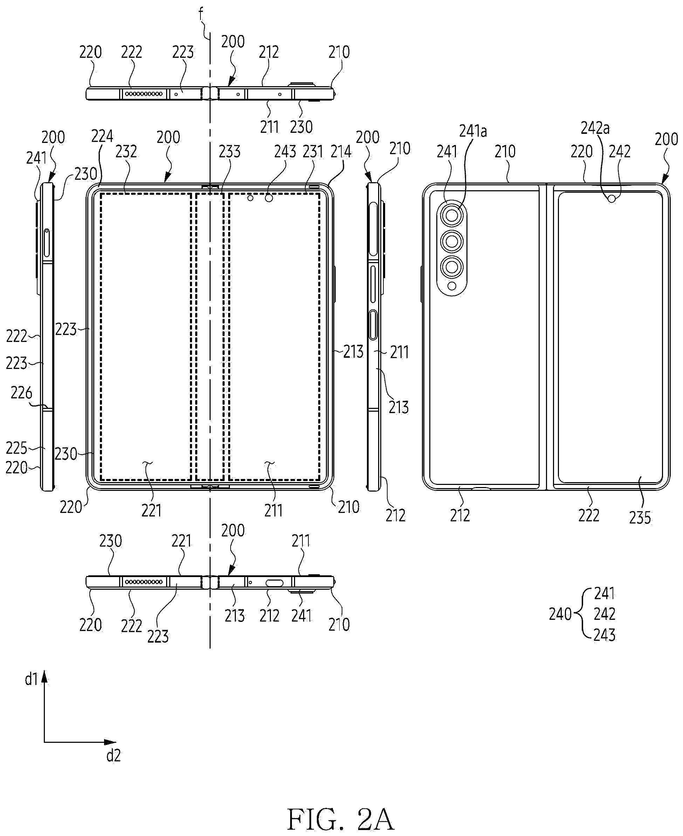

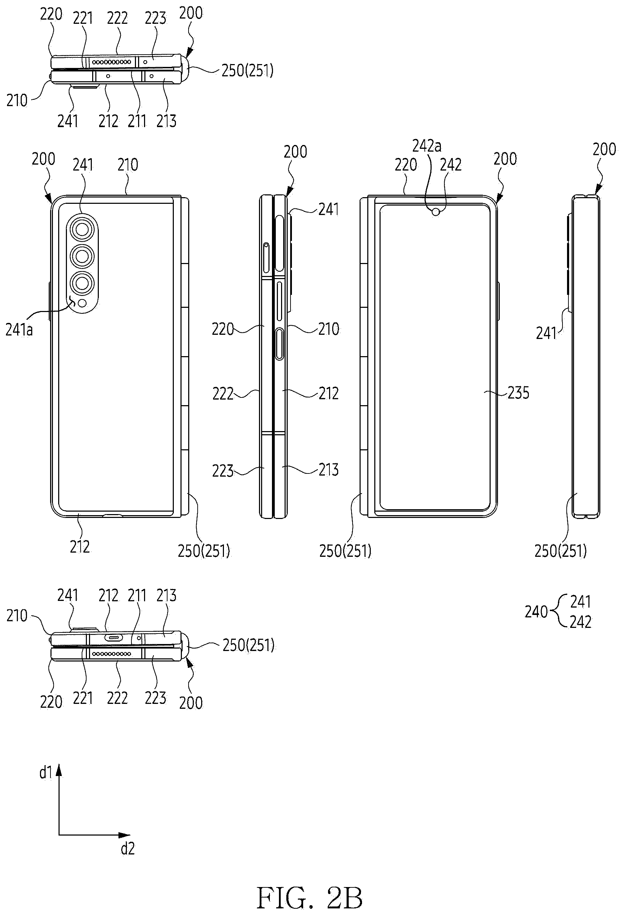

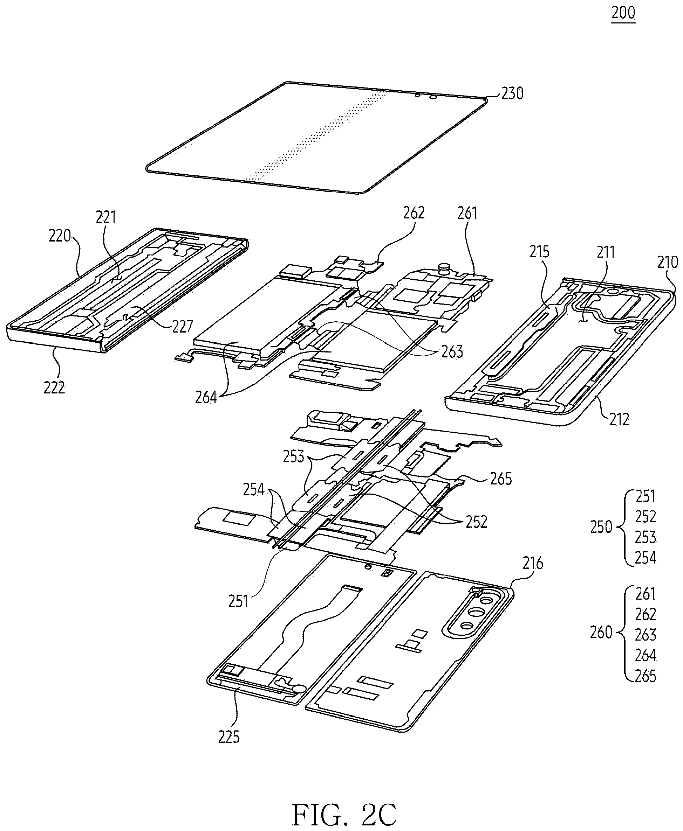

FIG. 2A illustrates an example of an unfolding state of an electronic device according to an embodiment, FIG. 2B illustrates an example of a folding state of an electronic device according to an embodiment, and FIG. 2C is an exploded view of an electronic device according to an embodiment.

Referring to FIGS. 2A, 2B, and 2C, an electronic device 200 (e.g., the electronic device 101 of FIG. 1) may include a first housing 210, a second housing 220, and a display 230 (e.g., the display module 160 of FIG. 1), at least one camera 240, a hinge structure 250, and/or at least one electronic component 260.

The first housing 210 and the second housing 220 may form at least a portion of an outer surface of the electronic device 200 that may be gripped by a user. At least a portion of the outer surface of the electronic device 200 defined by the first housing 210 and the second housing 220 may be in contact with a portion of a user's body when the electronic device 200 is used by the user. According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 and a periphery of the second surface 212. The first surface 211, the second surface 212, and the first side surface 213 may define an inner space of the first housing 210. According to an embodiment, the first housing 210 may provide a space formed by the first surface 211, the second surface 212, and the first side surface 213 as the space for disposing components of the electronic device 101.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 and a periphery of the fourth surface 222. The third surface 221, the fourth surface 222, and the second side surface 223 may define an inner space of the second housing 220. According to an embodiment, the second housing 220 may provide the space formed by the third surface 221, the fourth surface 222, and the second side surface 223 surrounding at least a portion of the third surface 221 and the fourth surface 222 as the space for mounting components of the electronic device 101. According to an embodiment, the second housing 220 may be coupled to the first housing 210 to be rotatable relative to the first housing 210.

According to an embodiment, each of the first housing 210 and the second housing 220 may include each of a first protection member 214 and a second protection member 224. The first protection member 214 and the second protection member 224 may be disposed on the first surface 211 and the third surface 221 along a periphery of the display 230. According to an embodiment, the first protection member 214 and the second protection member 224 may prevent foreign substance (e.g., dust or moisture) from introducing through a gap between the display 230, the first housing 210 and the second housing 220. For example, the first protection member 214 may surround a periphery of a first display region 231 of the display 230, and the second protection member 224 may surround a periphery of a second display region 232 of the display 230. The first protection member 214 may be formed by being attached to the first side surface 213 of the first housing 210, or may be integrally formed with the first side surface 213. The second protection member 224 may be formed by being attached to the second side surface 223 of the second housing 220, or may be integrally formed with the second side surface 223.

According to an embodiment, the first side surface 213 and the second side surface 223 may include a conductive material, a non-conductive material, or a combination thereof. For example, the second side surface 223 may include at least one conductive member 225 and at least one non-conductive member 226. The at least one conductive member 225 may include a plurality of conductive members spaced apart from each other. The at least one non-conductive member 226 may be disposed between the plurality of conductive members. The plurality of conductive members may be disconnected from each other, by the at least one non-conductive member 226 disposed between the plurality of conductive members. According to an embodiment, the plurality of conductive members and the plurality of non-conductive members may form an antenna radiator together. The electronic device 200 may be capable of communicating with an external electronic device through the antenna radiator formed by the plurality of conductive members and the plurality of non-conductive members.

The display 230 may be configured to display visual information. According to an embodiment, the display 230 may be disposed on the first surface 211 of the first housing 210 and the third surface 221 of the second housing 220 across the hinge structure 250. For example, the display 230 may include the first display region 231 disposed on the first surface 211 of the first housing, the second display region 232 disposed on the third surface 221 of the second housing, and a third display region 233 disposed between the first display region 231 and the second display region 232. The first display region 231, the second display region 232, and the third display region 233 may form a front surface of the display 230. According to an embodiment, the display 230 may further include a sub-display panel 235 disposed in the fourth surface 222 of the second housing 220. For example, the display 230 may be referred to as a flexible display 230. According to an embodiment, the display 230 may include a window exposed toward the outside of the electronic device 200. The window may protect a surface of the display 230, and transfer the visual information provided by the display 230 to the outside of the electronic device 200 by including a substantially transparent material. For example, the window may include glass (e.g., UTG, ultrathin glass) and/or polymer (e.g., PI, polyimide), but is not limited thereto.

The at least one camera 240 may be configured to obtain an image based on receiving light from an external subject of the electronic device 200. According to an embodiment, the at least one camera 240 may include first cameras 241, a second camera 242, and a third camera 243. The first cameras 241 may be disposed in the first housing 210. For example, the first cameras 241 may be disposed inside the first housing 210, and at least a portion of the first cameras 241 may be visible through the second surface 212 of the first housing 210. The first cameras 241 may be supported by a bracket (not illustrated) in the first housing 210. The first housing 210 may include at least one opening 241a overlapping the first cameras 241 when viewed from above the electronic device 200. The first cameras 241 may obtain an image based on receiving light from the outside of the electronic device 200 through the at least one opening 241a.

According to an embodiment, the second camera 242 may be disposed in the second housing 220. For example, the second camera 242 may be disposed inside the second housing 220 and may be visible through the sub-display panel 235. The second housing 220 may include at least one opening 242a overlapping the second camera 242 when viewed from above the electronic device 200. The second camera 242 may obtain an image based on receiving light from the outside of the electronic device 200 through the at least one opening 242a.

According to an embodiment, the third camera 243 may be disposed in the first housing 210. For example, the third camera 243 may be disposed inside the first housing 210, and at least a portion of the third camera 243 may be visible through the first surface 211 of the first housing 210. For another example, the third camera 243 may be disposed inside the first housing 210 and at least a portion of the third camera 243 may be visible through the first display region 231 of the display 230. The first display region 231 of the display 230 may include at least one opening overlapping the third camera 243 when viewed from above the display 230. The third camera 243 may obtain an image based on receiving light from the outside of the display 230 through at least one opening.

According to an embodiment, the second camera 242 and the third camera 243 may be disposed under (e.g., in a direction toward the inside of the first housing 210 or the inside of the second housing 220) the display 230. For example, the second camera 242 and the third camera 243 may be a under display camera (UDC). In case that the second camera 242 and the third camera 243 is the under-display camera, a region of the display 230 corresponding to a location of each of the second camera 242 and the third camera 243 may not be an inactive region. The inactive region of the display 230 may mean a region of the display 230 that does not include a pixel or does not emit light to the outside of the electronic device 200. For another example, the second camera 242 and the third camera 243 may be a punch hole camera. In case that the second camera 242 and the third camera 243 is the punch hole camera, the region of the display 230 corresponding to the location of each of the second camera 242 and the third camera 243 may be the inactive region.

According to an embodiment, the hinge structure 250 may rotatably connect the first housing 210 and the second housing 220. The hinge structure 250 may be disposed between the first housing 210 and the second housing 220 of the electronic device 101 so that the electronic device 200 may be bent, curved, or folded. For example, the hinge structure 250 may be disposed between a portion of the first side surface 213 and a portion of the second side surface 223 facing each other. The hinge structure 250 may change the electronic device 200 into an unfolding state in which a direction that the first surface 211 of the first housing 210 and the third surface 221 of the second housing 220 are facing is substantially the same as each other or into a folding state in which the first surface 211 and the third surface 221 face each other. When the electronic device 200 is in the folding state, the first housing 210 and the second housing 220 may be superimposed or overlapped by facing each other.

According to an embodiment, when the electronic device 200 is in the folding state, a direction in which the first surface 211 faces and a direction in which the third surface 221 faces may be different from each other. For example, when the electronic device 200 is in the folding state, the direction in which the first surface 211 faces and the direction in which the third surface 221 faces may be opposite to each other. For another example, when the electronic device 200 is in the folding state, the direction in which the first surface 211 faces and the direction in which the third surface 221 faces may be inclined relative to each other. In case that the direction in which the first surface 211 faces is inclined relative to the direction in which the third surface 221 faces, the first housing 210 may be inclined relative to the second housing 220.

According to an embodiment, the electronic device 200 may be foldable based on a folding axis f. The folding axis f may mean a virtual line extended through a hinge cover 251 in a direction (e.g., d1 of FIGS. 2A and 2B) parallel to a longitudinal direction of the electronic device 200, but is not limited thereto. For example, the folding axis f may be a virtual line extending in a direction (e.g., d2 in FIGS. 2A and 2B) perpendicular to the longitudinal direction of the electronic device 200. In case that the folding axis f extends in the direction perpendicular to the longitudinal direction of the electronic device 200, the hinge structure 250 may connect the first housing 210 and the second housing 220, by extending in the direction parallel to the folding axis f. The first housing 210 and the second housing 220 may be rotatable by the hinge structure 250 extending in the direction perpendicular to the longitudinal direction of the electronic device 200.

According to an embodiment, the hinge structure 250 may include the hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 200 is in the folding state, at least a portion of the hinge cover 251 surrounding the hinge structure 250 may be exposed to the outside of the electronic device 200 through a space between the first housing 210 and the second housing 220. According to another embodiment, when the electronic device 200 is in the unfolding state, the hinge cover 251 may not be exposed to the outside of the electronic device 200, by being covered by the first housing 210 and the second housing 220.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to a first front bracket 215 of the first housing 210 and the second hinge plate 253 may be coupled to a second front bracket 227 of the second housing 220. As the first hinge plate 252 and the second hinge plate 253 are coupled to the first front bracket 215 and the second front bracket 227, respectively, the first housing 210 and the second housing 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f, by including gears that may be engaged and rotated. According to an embodiment, there may be the plurality of hinge modules 254. For example, the plurality of hinge modules 254 may be disposed, respectively by being spaced apart from each other at both ending portion of the first hinge plate 252 and the second hinge plate 253.

According to an embodiment, the first housing 210 may include the first front bracket 215 and a rear bracket 216, and the second housing 220 may include the second front bracket 227. The first front bracket 215 and the rear bracket 216 may be disposed in the inside of the first housing 210 and support components of the electronic device 200. The second front bracket 227 may be disposed in the inside of the second housing 220 and support components of the electronic device 200. For example, the display 230 may be disposed in a surface of the first front bracket 215 and a surface of the second front bracket 227. The rear bracket 216 may be disposed in another surface of the first front bracket 215 facing the surface of the first front bracket 215. The sub-display panel 235 may be disposed in the rear bracket 216.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

At least one electronic component 260 may implement various functions for providing to a user. According to an embodiment, the at least one electronic component 260 may include a first printed circuit board 261, a second printed circuit board 262, a flexible printed circuit board 263, a battery 264, and/or an antenna 265. Each of the first printed circuit board 261 and the second printed circuit board 262 may form an electronical connection of components in the electronic device 200. For example, components (e.g., a processor 120 of FIG. 1) for implementing an overall function of the electronic device 200 may be disposed in the first printed circuit board 261, and electronic components for implementing a partial function of the first printed circuit board 261 may be disposed in the second printed circuit board 262. For another example, components for an operation of the sub-display panel 235 disposed in the fourth surface 222 may be disposed in the second printed circuit board 262.

According to an embodiment, the first printed circuit board 261 may be disposed in the first housing 210. For example, the first printed circuit board 261 may be disposed on a surface of the first front bracket 215. According to an embodiment, the second printed circuit board 262 may be disposed in the second housing 220. For example, the second printed circuit board 262 may be spaced apart from the first printed circuit board 261 and disposed on a surface of the second front bracket 227. The flexible printed circuit board 263 may connect the first printed circuit board 261 and the second printed circuit board 262. For example, the flexible printed circuit board 263 may extend from the first printed circuit board 261 to the second printed circuit board 262.

The battery 264, which is a device for supplying power to at least one component of the electronic device 200, for example, may include a non-rechargeable primary battery, or a rechargeable secondary battery, or a fuel cell. At least a portion of the battery 264 may be disposed substantially on the same plane as the first printed circuit board 261 or the second printed circuit board 262.

The antenna 265 may be configured to receive power or a signal from the outside of the electronic device 200. According to an embodiment, the antenna 265 may be disposed between the rear bracket 216 and the battery 264. For example, the antenna 265 may include a near field communication (NFC) antenna, an antenna module, and/or a magnetic secure transmission (MST) antenna. For example, the antenna 265 may perform short-range communication with an external device, or wirelessly transmit and receive the power required for charging.

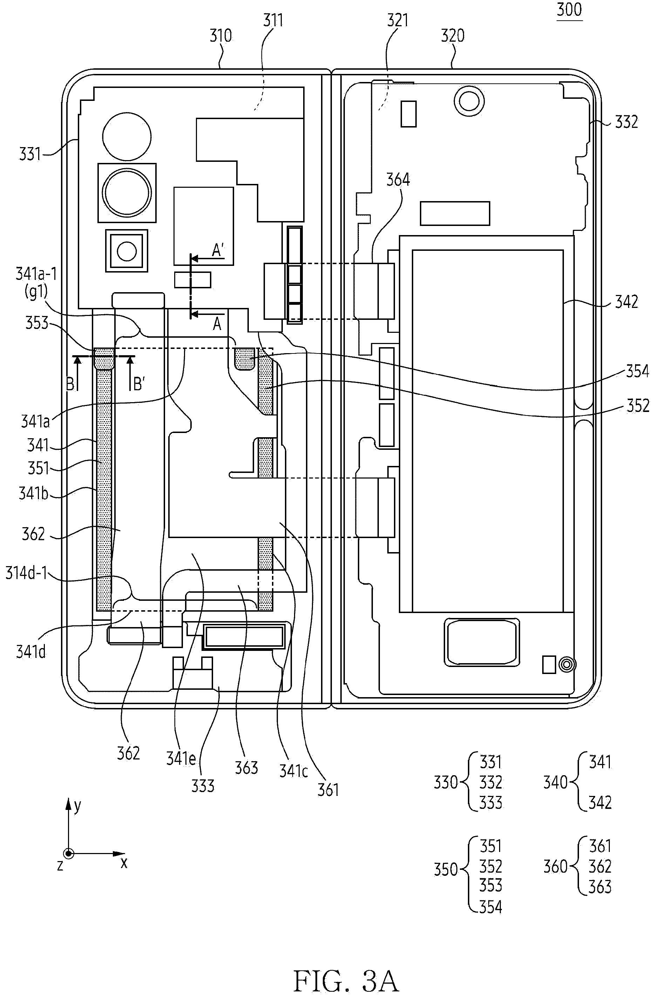

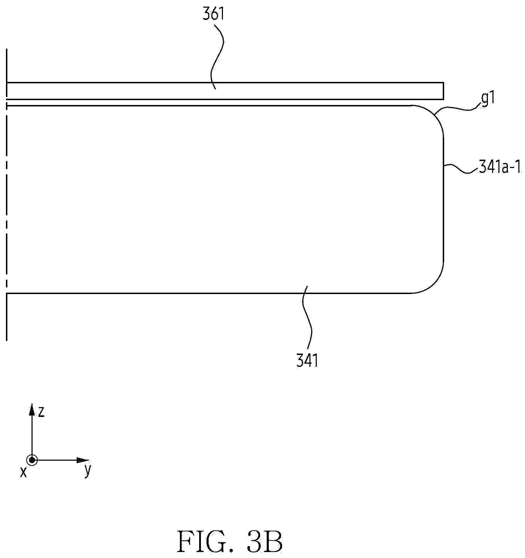

FIG. 3A is a top plan view of an exemplary electronic device according to an embodiment, and FIG. 3B is a cross-sectional view illustrating an example of an exemplary electronic device cut along line A-A' of FIG. 3A, according to an embodiment

Referring to FIGS. 3A and 3B, an electronic device 300 (e.g., the electronic device 101 of FIG. 1 and the electronic device 200 of FIGS. 2A, 2B, and 2C) according to an embodiment may include a first housing 310 (e.g., the first housing 210 of FIGS. 2A, 2B, and 2C), a second housing 320 (e.g., the second housing 220 of FIGS. 2A, 2B, and 2C), a plurality of printed circuit boards 330, a battery 340 (e.g., the battery 189 of FIG. 1, the battery 264 of FIG. 2C), a plurality of tapes 350, and/or a plurality of flexible printed circuit boards 360. According to an embodiment, the electronic device 300 may be referred to as a foldable device in that a display (e.g., the display 230 of FIGS. 2A, 2B, and 2C) is foldable.

According to an embodiment, the first housing 310 may define a portion of an outer surface of the electronic device 300. The second housing 320 may define another portion of the outer surface of the electronic device 300. According to an embodiment, the second housing 320 may be movable relative to the first housing 310. For example, the second housing 320 may be coupled to the first housing 310 to be rotatable relative to the first housing 310. For example, the second housing 320 may be coupled to the first housing 310 to be pivotable relative to the first housing 310. According to an embodiment, the second housing 320 may be coupled to the first housing 310 through a hinge structure (e.g., the hinge structure 250 of FIGS. 2A, 2B and 2C).

According to an embodiment, as the second housing 320 moves relative to the first housing 310, a state of the electronic device 300 may be changed. The display 230 may be folded or unfolded, by moving of the second housing 320 relative to the first housing 310. For example, as the second housing 320 moves relative to the first housing 310, the state of the electronic device 300 may be changed to a folding state or an unfolding state. The display 230 may be disposed on a first surface 311 (e.g., the first surface 211 of FIGS. 2A, 2B, and 2C) of the first housing 310, and a third surface 321 (e.g., the third surface 221 of FIGS. 2A, 2B, and 2C) of the second housing 320. In the folding state of the electronic device 300, the first surface 311 of the first housing 310 and the third surface 321 of the second housing 320 may face each other. For example, in the folding state of the electronic device 300, a direction in which the first surface 311 faces may face a direction opposite to a direction in which the third surface 321 faces. When the first surface 311 and the third surface 321 face each other in the folding state of the electronic device 300, the display 230 disposed on the first surface 311 and the third surface 321 may be folded. In the unfolding state of the electronic device 300, the direction in which the first surface 311 faces and the direction in which the third surface 321 faces may be the same each other. As the direction in which the first surface 311 faces and the direction in which the third surface faces are the same each other in the unfolding state of the electronic device 300, the display 230 disposed on the first surface 311 and the third surface 321 may be unfolded.

The plurality of printed circuit boards 330 (PCBs) may form an electrical connection between electronic components in the electronic device 300. For example, the plurality of printed circuit boards 330 may support the electronic components in electronic device 300. For example, the plurality of printed circuit boards 330 may support the electronic components disposed on a surface of each of the plurality of printed circuit boards 330. The plurality of printed circuit boards 330 may have rigidity to support the electronic components in the electronic device 300. According to an embodiment, the plurality of printed circuit boards 330 may include a first printed circuit board 331, a second printed circuit board 332, and/or a third printed circuit board 333.

The first printed circuit board 331 may form an electrical connection of electronic components disposed in the first housing 310. The first printed circuit board 331 may be electrically connected to the electronic components in the first housing 310 and electronic components disposed in the second housing 320. According to an embodiment, the first printed circuit board 331 may be disposed in the first housing 310. For example, the first printed circuit board 331 may include a processor (e.g., the processor 120 of FIG. 1) disposed on a surface of the first printed circuit board 331. For example, the first printed circuit board 331 may be referred to as a main printed circuit board (PCB).

The second printed circuit board 332 may form an electrical connection between the electronic components disposed in the second housing 320. According to an embodiment, the second printed circuit board 332 may be disposed in the second housing 320. The second printed circuit board 332 may be spaced apart from the first printed circuit board 331. For example, the second printed circuit board 332 may be referred to as a sub-printed circuit board (sub PCB).

The third printed circuit board 332 may include electronic components for implementing an interface (e.g., the interface 177 of FIG. 1) and a communication module (e.g., the communication module 190 of FIG. 1). According to an embodiment, the third printed circuit board 332 may be spaced apart from the first printed circuit board 331. The third printed circuit board 332 may be disposed in the first housing 310.

The battery 340 may be configured to supply power to the electronic components in the electronic device 300. According to an embodiment, the battery 340 may include a first battery 341 and a second battery 342. The first battery 341 may be configured to supply power to the electronic components disposed in the first housing 310. The first battery 341 may be disposed in the first housing 310. For example, the first battery 341 may be disposed between the first printed circuit board 331 and the third printed circuit board 333. According to invention, the first battery 341 includes a first periphery 341a, a second periphery 341b, a third periphery 341c, and/or a fourth periphery 341d. A periphery, among regions included in a component, means a region including a boundary for distinguishing the component from other components. The first periphery 341a may face a side surface of the first printed circuit board 331. The second periphery 341b may be connected to an ending portion of the first periphery 341a. The second periphery 341b may extend in a direction substantially perpendicular to the first periphery 341a. The third periphery 341c may be connected to another ending portion of the first periphery 341a. Another ending portion of the first periphery 341a may be opposite to the ending portion of the first periphery 341a connected to the second periphery 341b. The third periphery 341c may extend in a direction substantially perpendicular to the first periphery 341a. The third periphery 341c may extend in a direction substantially parallel to the second periphery 341b. The fourth periphery 341d may connect the second periphery 341b and the third periphery 341c. The fourth periphery 341d may extend between the second periphery 341b and the third periphery 341c. The fourth periphery 341d may be substantially parallel to the first periphery 341a. According to an embodiment, the fourth periphery 341d may face a side surface of the third printed circuit board 333.

According to an embodiment, the first printed circuit board 331 may be spaced apart from a battery 341 along a first direction (e.g., a +y direction). For example, the first printed circuit board 331 may be spaced apart from the first periphery 341a in the first direction (e.g., the +y direction). The second printed circuit board 332 may be spaced apart from the battery 341 along a second direction different from the first direction. The second direction may indicate a direction distinguished from the first direction. For example, the second direction may indicate at least one of a direction opposite to the first direction, a direction inclined relative to the first direction, or a direction perpendicular to the first direction. For example, the second printed circuit board 332 may be spaced apart from the first periphery 341a along the second direction (e.g., a +x direction) different from the first direction. The third printed circuit board 333 may be spaced apart from the battery 341 along the second direction different from the first direction. For example, the third printed circuit board 333 may be spaced apart from the first periphery 341a along the second direction (e.g., a -y direction) different from the first direction.

The second battery 342 may be configured to supply power to the electronic components disposed in the second housing 320. The second battery 342 may be disposed in the second housing 320. The second battery 342 may be spaced apart from the first battery 341.

The plurality of tapes 350 may prevent a short circuit of the battery 340. For example, each of the plurality of tapes 350 may include an insulating material. According to an embodiment, the plurality of tapes 350 may seal the battery 340. For example, the plurality of tapes 350 may prevent oxidation of electrodes in the battery 3540. For example, the plurality of tapes 350 may block smoke generated in the battery 340 from being released to an outside when the battery 340 is overheated. According to an embodiment, the plurality of tapes 350 may surround the first battery 341. The plurality of tapes 350 may surround at least a portion of peripheries 341a, 341b, 341c, and 341d of the first battery 341. The plurality of tapes 350 may include a first tape 351, a second tape 352, a third tape 353, and/or a fourth tape 354.

The first tape 351 may be disposed on the second periphery 341b. The first tape 351 may extend along the second periphery 341b. For example, the first tape 351 may extend from an ending portion of the second periphery 341b in contact with the first periphery 341a to another ending portion of the second periphery 341b in contact with the fourth periphery 341d. According to an embodiment, the first tape 351 may surround a portion of a surface 341e of the first battery 341, a portion of a side surface of the first battery 341 facing an -x axis direction, and a portion of another surface of the first battery 341 opposite to the surface 341e of the first battery 341. A direction (e.g., a -z direction) in which another surface of the first battery 341 faces may be opposite to a direction (e.g., a +z direction) in which the surface 341e of the first battery 341 faces. The side surface of the first battery may mean a surface connecting the surface 341e of the first battery 341 and another surface of the first battery 341.

The second tape 352 may be disposed on the third periphery 341c. The second tape 352 may extend along the third periphery 341c. For example, the second tape 352 may extend from an ending portion of the third periphery 341c in contact with the first periphery 341a to another ending portion of the third periphery 341c in contact with the fourth periphery 341d. According to an embodiment, the second tape 352 may surround a portion of the surface 341e of the first battery 341, a portion of the side surface of the first battery 341 facing a +x axis direction, and a portion of another surface of the first battery 341 opposite to the surface 341e of the first battery 341.

When viewed from above the first battery 341, the third tape 353 may overlap at least a portion of the first tape 351. For example, the third tape 353 may be disposed on the first tape 351. The third tape 353 may surround the ending portion of the second periphery 341b in contact with the first periphery 341a. The third tape 353 may surround the portion of the surface 341e of the first battery 341, the portion of the side surface of the first battery 341 facing a +y axis direction, and the portion of another surface of the first battery 341 opposite to the surface 341e of the first battery 341.

The fourth tape 354 may be spaced apart from the second tape 352 when viewed from above the first battery 341. For example, the fourth tape 354 may be disposed between the first tape 351 and the second tape 352 when viewed from above the first battery 341. The fourth tape 354 may be spaced apart from the third periphery 341c. The fourth tape 354 may be connected to the second tape 352 on the side surface of the first battery 341 facing the first printed circuit board 331. The fourth tape 354 may overlap the portion of the second tape 352 disposed on the side surface of the first battery 341 facing the first printed circuit board 331. The fourth tape 354 may surround the portion of the surface 341e of the first battery 341, the portion of the side surface of the first battery 341 facing a +y axis direction, and the portion of another surface of the first battery 341 opposite to the surface 341e of the first battery 341.

The plurality of flexible printed circuit boards 360 (FPCB) may connect the plurality of printed circuit boards 330 to each other. The plurality of flexible printed circuit boards 360 may electrically connect the plurality of printed circuit boards 330. For example, the plurality of flexible printed circuit boards 360 may electrically connect one of the plurality of printed circuit boards 330 and the other of the plurality of printed circuit boards 330 through a connector, but it is not limited thereto. According to embodiments, the plurality of flexible printed circuit boards 360 may be manufactured integrally with at least a portion of the plurality of printed circuit boards 330. According to an embodiment, the plurality of flexible printed circuit boards 360 may have a curved shape in the electronic device 300. For example, the plurality of flexible printed circuit boards 360 may have flexibility and bent in the electronic device 300. According to an embodiment, the plurality of flexible printed circuit boards 360 may include a first flexible printed circuit board 361, a second flexible printed circuit board 362, a third flexible printed circuit board 363, and/or a fourth flexible printed circuit board 364.

The first flexible printed circuit board 361 may electrically connect the first printed circuit board 331 and the second printed circuit board 332. The first flexible printed circuit board 361 may perform transmission of a signal for an overall operation of the electronic device 300. For example, an audio signal may be transmitted to the first printed circuit board 331 or the second printed circuit board 332 through the first flexible printed circuit board 361. For example, a signal obtained by an input from an external object (e.g., an electronic pen) may be transmitted to the first printed circuit board 331 or the second printed circuit board 332 through the first flexible printed circuit board 361. According to an embodiment, the first flexible printed circuit board 361 may extend from the first printed circuit board 331 in the first housing 310 to the second printed circuit board 332 in the second housing 320. For example, an ending portion of the first flexible printed circuit board 361 may be disposed on the first printed circuit board 331, and another ending portion of the first flexible printed circuit board 361 opposite to the ending portion of the first flexible printed circuit board 361 may be disposed on the second printed circuit board 332. The first flexible printed circuit board 361 may be disposed on the surface 341e of the first battery 341. For example, the first flexible printed circuit board 361 may cross the first battery 341. For example, the first flexible printed circuit board 361 may be disposed on the surface 341e of the first battery 341. For example, the portion of the first flexible printed circuit board 361 may be disposed on the first periphery 341a of the first battery 341 facing the first printed circuit board 331. According to an embodiment, the first flexible printed circuit board 361 may be bent on the surface 341e of the first battery 341. For example, the first flexible printed circuit board 361 may be bent on the surface 341e of the first battery 341 and disposed on the third periphery 342b of the first battery 341. According to an embodiment, when viewed from above the first battery 341, the first flexible printed circuit board 331 may overlap a portion of the first battery 341. For example, when viewed from above the first battery 341, the first flexible printed circuit board 331 may overlap the first periphery 341a and the third periphery 341c. For example, when viewed from above the first battery 341, the first flexible printed circuit board 331 may not overlap the second periphery 341b and the fourth periphery 341d. For example, the first flexible printed circuit board 331 may be spaced apart from the second periphery 341b and the fourth periphery 341d.

The second flexible printed circuit board 362 may electrically connect the first printed circuit board 331 and the third printed circuit board 333. The second flexible printed circuit board 362 may perform transmission of a signal between an interface (e.g., the interface 177 of FIG. 1) of the electronic device 300 and the first printed circuit board 331. For example, the second flexible printed circuit board 362 may transmit the signal inputted from an external electronic device (e.g., the electronic device 102 of FIG. 1) to the first printed circuit board 362. According to an embodiment, the second flexible printed circuit board 362 may extend from the first printed circuit board 331 to the third printed circuit board 333. For example, an ending portion of the second flexible printed circuit board 362 may be disposed on the first printed circuit board 331, and another ending portion of the second flexible printed circuit board 362 opposite to the ending portion of the second flexible printed circuit board 362 may be disposed on the third printed circuit board 333. According to an embodiment, the second flexible printed circuit board 362 may cross the first battery 341. For example, the second flexible printed circuit board 362 may extend from the first printed circuit board 331 to the third printed circuit board 333 along the direction (e.g., the -y direction) perpendicular to the first periphery 341a. For example, the second flexible printed circuit board 362 may extend along a direction (e.g., the -y direction) from the first periphery 341a toward the fourth periphery 341b. According to an embodiment, when viewed from above the first battery 341, the second flexible printed circuit board 362 may overlap the first periphery 341a and the fourth periphery 341d. For example, when viewed from above the first battery 341, the second flexible printed circuit board 362 may not overlap the second periphery 341b and the third periphery 341d. For example, when viewed from above the first battery 341, the second flexible printed circuit board 362 may be disposed between the second periphery 341b and the third periphery 341d.

The third flexible printed circuit board 363 may electrically connect the first printed circuit board 331 and the third printed circuit board 333. The third flexible printed circuit board 363 may perform transmission of an RF signal between the first printed circuit board 331 and the third printed circuit board 333. According to an embodiment, when viewed from above the first battery 341, the third flexible printed circuit board 363 may overlap the third periphery 341c and the fourth periphery 341d. When viewed from above the first battery 341, the third flexible printed circuit board 363 may not overlap the first periphery 341a and the second periphery 341b.

The fourth flexible printed circuit board 364 may electrically connect the first printed circuit board 331 and the second printed circuit board 332. The fourth flexible printed circuit board 364 may perform transmission of a signal for an overall operation of the electronic device 300. For example, the fourth flexible printed circuit board 364 may transmit a signal between the first printed circuit board 331 and the second printed circuit board 362 together with the first flexible printed circuit board 361. According to an embodiment, the fourth flexible printed circuit board 364 may extend from the first printed circuit board 331 to the second printed circuit board 332. The fourth flexible printed circuit board 364 may be spaced apart from the first flexible printed circuit board 361. According to an embodiment, the fourth flexible printed circuit board 364 may extend from the first housing 310, across the hinge structure (e.g., FIGS. 2A, 2B, and 2C), to the second housing 320.

According to the invention, a portion 341a-1 of the first periphery 341a is exposed in a direction (e.g., a +z direction) toward the first flexible printed circuit board 361 between the first tape 351 and the second tape 352. The plurality of tapes 350 are not disposed on the portion 341a-1 of the first periphery 341a. For example, the portion 341a-1 of the first periphery 341a is spaced apart from the plurality of tapes 350. According to an embodiment, the portion 341a-1 of the first periphery 341a may be exposed toward the first flexible printed circuit board 361 between the third tape 353 and the fourth tape 354. For example, the fourth tape 354 may surround another portion 341a-2 of the first periphery 341a between the first flexible printed circuit board 361 and the second tape 352.

The portion 341a-1 of the first periphery 341a is disposed between the first tape 351 and the second tape 352, and may face the first flexible printed circuit board 361 through a gap g1 between the first tape 351 and the second tape 352. The portion 341a-1 of the first periphery 341a may mean a region of the first battery 341 in which a protection circuit module (PCM) of the first battery 341 is not included among the regions of the first battery 341. The gap g1 may mean a region of the first battery 341 in which the plurality of tapes 350 is not disposed. The gap g1 may be formed by being spaced apart from the first tape 351 along a direction (e.g., a +x direction) in which the second tape 352 faces the third periphery 341c from the second periphery 341b. For example, the portion 341a-1 of the first periphery 341a may be spaced apart from the first flexible printed circuit board 361 in the gap g1 between the first tape 351 and the second tape 352. For example, the portion 341a-1 of the first periphery 341a may be in contact with the first flexible printed circuit board 361 in the gap g1 between the first tape 351 and the second tape 352. For example, in case that the plurality of tapes 350 is disposed in the portion 341a-1 of the first periphery 341a, the portion 341a-1 of the first periphery 341a may form a step with other regions of the first battery 341. In case that the plurality of tapes 350 is disposed in the portion 341a-1 of the first periphery 341a, due to a thickness of the plurality of tapes 350, a size of a space in the first housing 310 accommodating the first battery 341 may be designed based on a sum of a thickness of the first battery 341 and the thickness of the plurality of tapes 350. A thickness of a component may mean a distance in a direction (e.g., a -z direction) opposite to a direction (a +z direction) in which a surface 341e of the first battery 341 faces, and the corresponding expression may be used in the same way in the following. When the plurality of tapes 350 is disposed in the portion 341a-1 of the first periphery 341a, the size of the space accommodating the first battery 341 may be reduced by the thickness of the plurality of tapes 350. In case that thickness of the first flexible printed circuit board 361 overlapping the portion 341a-1 of the first periphery 341a is reduced to suppress a reduction in the size of the space accommodating the first battery 341, a portion of a plurality of layers in the first flexible printed circuit board 361 may be omitted. In case that a portion of layers for shielding noise among the plurality of layers of the first flexible printed circuit board 361 is omitted, transmission efficiency of the signal between the first printed circuit board 331 and the second printed circuit board 332 may be reduced. In case that a portion of signal patterns for signal transmission among the plurality of layers in the first flexible printed circuit board 361 is omitted, data transmission efficiency between the first printed circuit board 331 and the second printed circuit board 332 may be reduced. Since the plurality of tapes 350 is not disposed on the portion 341a-1 of the first periphery 341a, the electronic device 300 according to an embodiment may provide a structure capable of increasing the size of the space accommodating the first battery 341. As the size of the space accommodating the first battery 341 increases, the electronic device 300 may provide a structure in which a size of the first battery 341 is increased.

According to an embodiment, the portion 341a-1 of the first periphery 341a may be exposed toward the second flexible printed circuit board 362 between the first tape 351 and the second tape 352. The portion 341a-1 of the first periphery 341a may be disposed between the first tape 351 and the second tape 352, and may face the second flexible printed circuit board 362 through the gap g1 between the first tape 351 and the second tape 352. For example, the portion 341a-1 of the first periphery 341a may be spaced apart from the second flexible printed circuit board 362 in the gap g1 between the first tape 351 and the second tape 352. For example, the portion 341a-1 of the first periphery 341a may be in contact with the second flexible printed circuit board 362 in the gap g1 between the first tape 351 and the second tape 352.

According to an embodiment, a portion 341d-1 of the fourth periphery 341d may be exposed in a direction (e.g., a +z direction) toward the second flexible printed circuit board 362 between the first tape 351 and the second tape 352. The portion 341d-1 of the fourth periphery 341d may be disposed between the first tape 351 and the second tape 352, and may face the second flexible printed circuit board 362 through the gap g1 between the first tape 351 and the second tape 352. For example, the portion 341d-1 of the fourth periphery 341d may be spaced apart from the second flexible printed circuit board 362 in the gap between the first tape 351 and the second tape 352. For example, the portion 341d-1 of the fourth periphery 341d may be in contact with the second flexible printed circuit board 362 in the gap between the first tape 351 and the second tape 352.

As described above, since the portion 341a-1 of the first periphery 341a faces the first flexible printed circuit board 361 through the gap between the first tape 351 and the second tape 352, the electronic device 300 according to an embodiment may provide the structure in which the size of the first battery 341 is increased. Since the portion 341a-1 of the first periphery 341a faces the second flexible printed circuit board 362 through the gap between the first tape 351 and the second tape 352, the electronic device 300 according to an embodiment may provide the structure in which the size of the first battery 341 is increased.

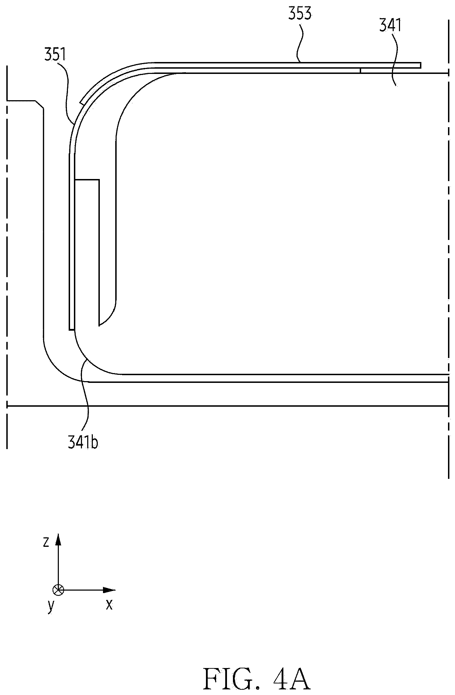

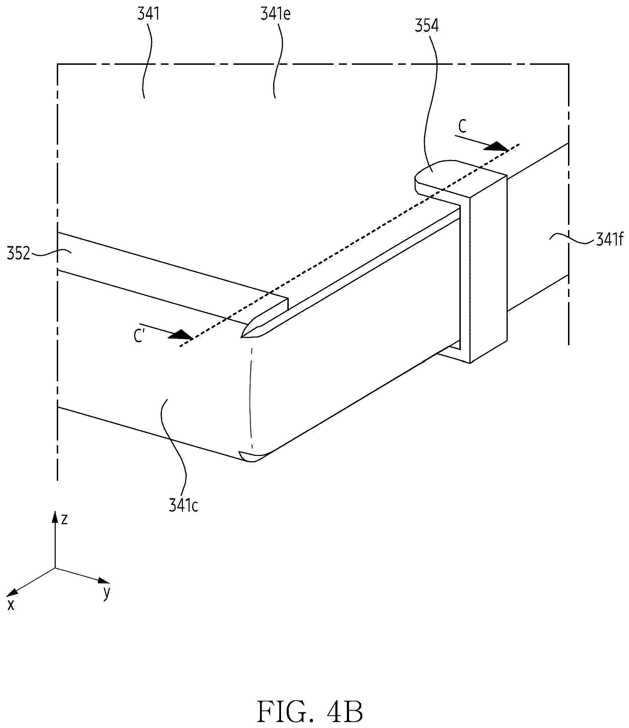

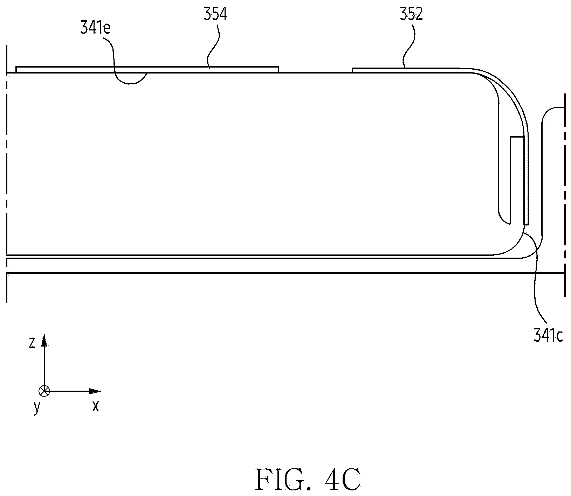

FIG. 4A is a cross-sectional view illustrating an example of an exemplary electronic device cut along line B-B' of FIG. 3A, according to an embodiment, FIG. 4B is a perspective view illustrating a portion of a battery of an exemplary electronic device according to an embodiment, and FIG. 4C is a cross-sectional view illustrating an example of a battery of an exemplary electronic device cut along line C-C' of FIG. 4B, according to an embodiment.

Referring to FIGS. 4A, 4B, and 4C, a first tape 351 according to an embodiment may surround a second periphery 341b of a first battery 341. The first tape 351 may surround an outer surface of the second periphery 341b and have a shape corresponding to the outer surface of the second periphery 341b. For example, the first tape 351 may have curvature and be bent on the second periphery 341b.

According to an embodiment, a third tape 353 may surround the first tape 351. The third tape 353 may surround the first tape 351 on the first tape 351. For example, the third tape 353 may have curvature and be bent on the second periphery 341b. The third tape 353 may overlap the first tape 351. As the third tape 353 and the first tape 351 overlap, the third tape 353 and the first tape 351 may seal a first battery 341.

According to an embodiment, a second tape 352 may surround a third periphery 341c of the first battery 341. For example, the second tape 352 may surround an outer surface of the third periphery 341c and have a shape corresponding to the outer surface of the third periphery 341c. For example, the second tape 352 may have curvature and be bent on the third periphery 341c. According to an embodiment, the second tape 352 may surround a side surface 341f of the first battery 341. For example, the side surface 341f of the first battery 341 may face a side surface of a first printed circuit board (e.g., the first printed circuit board 331 of FIG. 3A).

According to an embodiment, a fourth tape 354 may surround a portion of the second tape 352. The fourth tape 354 may surround the portion of the second tape 352 on the second tape 352. For example, a portion of the fourth tape 354 may surround the portion of the second tape 352 disposed on the side surface 341f of the first battery 341. The portion of the fourth tape 354 may overlap the portion of the second tape 352 on the side surface 341f of the first battery 341. As the portion of the fourth tape 354 and the portion of the second tape 352 overlap each other, the fourth tape 354 and the second tape 352 may seal the first battery 341.

According to an embodiment, another portion of the fourth tape 354 may be disposed on a surface 341e of the first battery 341. For example, the fourth tape 354 may surround the second tape 352 on the side surface 341f of the first battery 341 and extend to the surface 341e of the first battery 341. According to an embodiment, the second tape 352 and the fourth tape 354 may be spaced apart from each other, on the surface 341e of the first battery 341.

As described above, the electronic device (e.g., the electronic device 300 of FIG. 3A) according to an embodiment may provide a structure capable of sealing the first battery 341 by a plurality of tapes 350 overlapping each other.

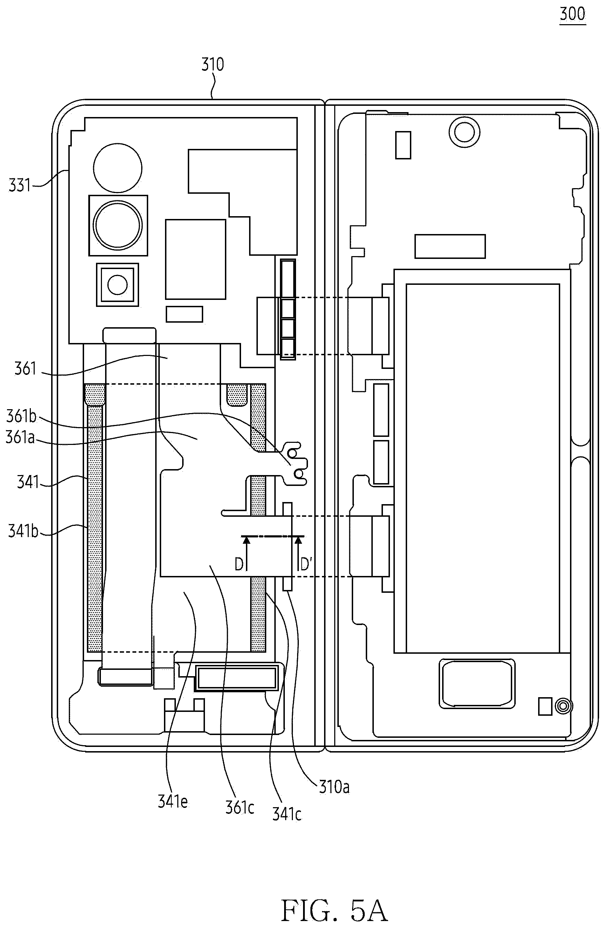

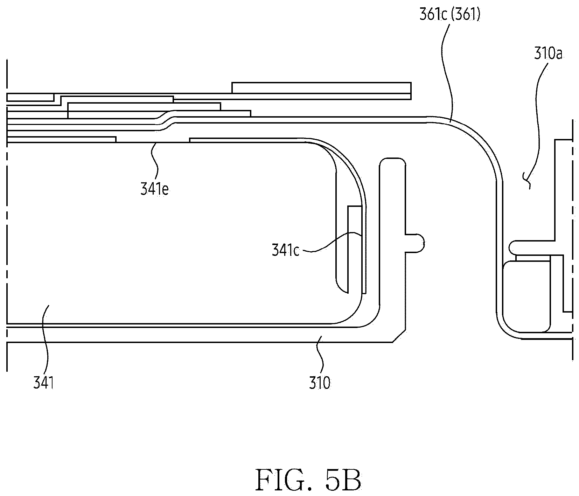

FIG. 5A is a top plan view of an exemplary electronic device according to an embodiment, and FIG. 5B is a cross-sectional view illustrating an example of an exemplary electronic device cut along line D-D' of FIG. 5A according to an embodiment.

Referring to FIGS. 5A and 5B, a first flexible printed circuit board 361 according to an embodiment may include a first extending portion 361a, a second extending portion 361b, and/or a third extending portion 361c. The first extending portion 361a may extend along a direction (e.g., a -y direction) perpendicular to a first periphery 341a. The first extending portion 361a may extend on a surface 341e of a first battery 341 along the direction perpendicular to the first periphery 341a. For example, an ending portion of the first extending portion 361a may be disposed on a first printed circuit board 331. The first extending portion 361a may extend from the first printed circuit board 331 to a direction (e.g., the -y direction) from the first periphery 341a toward a fourth periphery 341d. A portion of the first extending portion 361a may overlap the first periphery 341a when viewed from above the first battery 341.

The second extending portion 361b may be connected to the first extending portion 361a. For example, the second extending portion 361b may extend from the first extending portion 361a toward a third periphery 341c. For example, the second extending portion 361b may extend in a direction (e.g., a +x direction) toward the third periphery 341c on the surface 341e of the first battery 341. According to an embodiment, a portion of the second extending portion 361b may overlap the third periphery 341c when viewed from above the first battery 341. The portion of the second extending portion 361b may be disposed on the third periphery 341c. According to an embodiment, an ending portion of the second extending portion 361b may be coupled to a first housing 310. For example, the ending portion of the second extending portion 361b may be fixed to the first housing 310. As the ending portion of the second extending portion 361b is coupled to the first housing 310, the second extending portion 361b may support the first flexible printed circuit board 361. The second extending portion 361b may prevent a first flexible printed circuit board 361 from deviating from a designed location in the first housing 310. When the electronic device 300 is manufactured, the second extending portion 361b may prevent the first flexible printed circuit board 361 from being damaged by external force.

The third extending portion 361c may be connected to the first extending portion 361a. The third extending portion 361c may be spaced apart from the second extending portion 361b. According to an embodiment, the third extending portion 361c may extend from the first extending portion 361a toward the third periphery 341c. For example, the third extending portion 361c may extend in the direction (e.g., the +x direction) toward the third periphery 341c on the surface 341e of the first battery 341. When viewed from above the first battery 341, according to an embodiment, a portion of the third extending portion 361c may overlap the third periphery 341c. The portion of the third extending portion 361c may be disposed on the third periphery 341c.

According to an embodiment, the first housing 310 may include a through hole 310a penetrating the first housing 310. The through hole 310a may be disposed close to the third periphery 341c among the second periphery 341b and the third periphery 341c. According to an embodiment, the third extending portion 361c may extend to a second housing (e.g., the second housing 320 of FIG. 3A) via the through hole 310a. For example, the third extending portion 361c may extend parallel to the surface 341e of the first battery 341. The third extending portion 361c may be bent at a location adjacent to the through hole 310a after passing through the third periphery 341c. A bent third extending portion 361c may be inserted into the through hole 310a. The third extending portion 361c may extend, passing through the through hole 310a, to a second printed circuit board (e.g., the second printed circuit board 332 of FIG. 3A) in the second housing 320.

As described above, the electronic device 300 according to an embodiment may provide a structure in which the first flexible printed circuit board 361 may be stably supported through the second extending 361b coupled to the first housing 310.

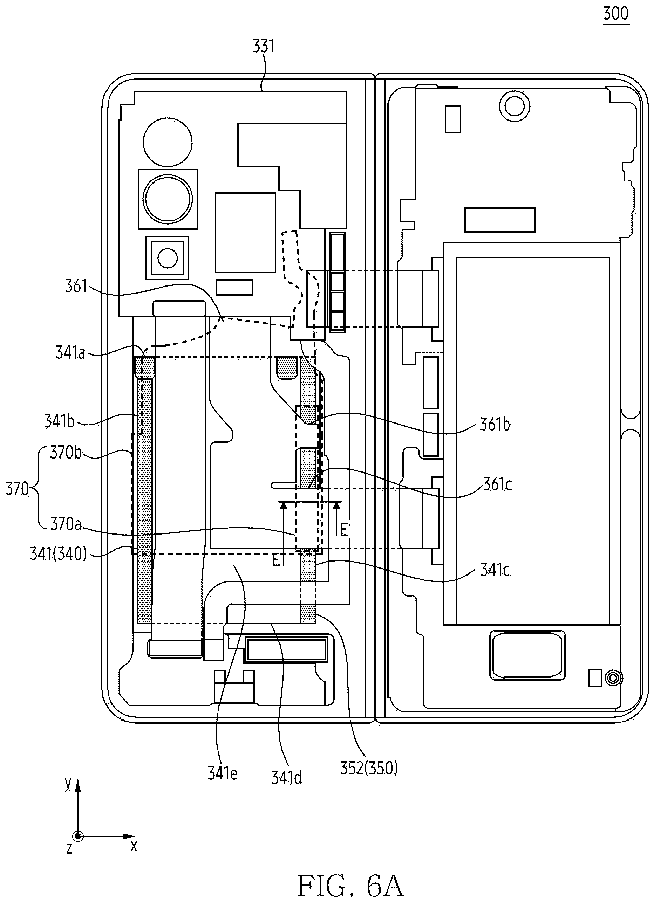

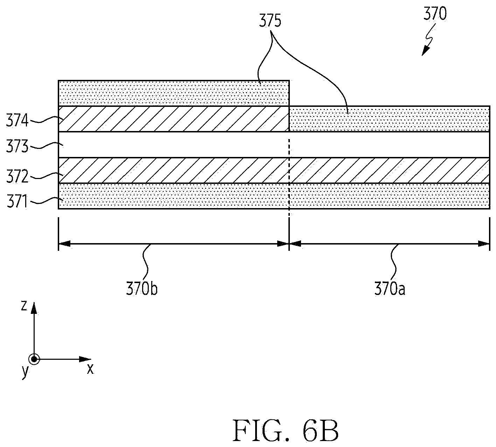

FIG. 6A is a top plan view of an exemplary electronic device according to an embodiment, and FIG. 6B is a cross-sectional view illustrating an example of an antenna module of an exemplary electronic device cut along E-E' of FIG. 6A, according to an embodiment.

Referring to FIGS. 6A and 6B, an electronic device 300 according to an embodiment may include an antenna module 370. The antenna module 370 may receive a signal from an external electronic device or transmit the signal to the external electronic device. The antenna module 370 may receive power from an outside of the electronic device 300 and transfer the received power to the first printed circuit board 331. For example, based on receiving AC power from the outside of the electronic device 300, the antenna module 370 may transfer the received AC power to the first printed circuit board 331. The first printed circuit board 331 may include a wireless charging circuit configured to convert the AC power transferred from the antenna module 370. Based on receiving the AC power from the antenna module 370, the wireless charging circuit of the first printed circuit board 331 may convert the received AC power into DC power. The wireless charging circuit of the first printed circuit board 331 may store the converted DC power in a battery 340. For example, the antenna module 370 may include at least one of a near field communication (NFC) antenna and a magnetic secure transmission (MST) antenna, but is not limited thereto.

According to an embodiment, the antenna module 370 may be disposed on a surface 341e of a first battery 341. For example, the antenna module 370 may be spaced apart from the surface 341e of the first battery 341 along a direction (e.g., a +z direction) in which the surface 341e of the first battery 341 faces. According to an embodiment, when viewed from above the first battery 341, the antenna module 370 may overlap the first battery 341. For example, when viewed from above the first battery 341, the antenna module 370 may overlap a first periphery 341a, a second periphery 341b, and a third periphery 341c of the first battery 341. For example, when viewed from above the first battery 341, the antenna module 370 may be spaced apart from a fourth periphery 341d.

According to an embodiment, the antenna module 370 may include a first region 370a and a second region 370b. When viewed from above the first battery 341, the first region 370a may overlap a first flexible printed circuit board 361 disposed on the third periphery 341c. For example, when viewed from above the first battery 341, the first region 370a may overlap a second extending portion 361b and a third extending portion 361c of the first flexible printed circuit board 361. According to an embodiment, the first region 370a may be disposed on the third periphery 341c and the first flexible printed circuit board 361.

The second region 370b may be connected to the first region 370a. According to an embodiment, the second region 370b may surround at least a portion of the first region 370a. For example, when viewed from above the first battery 341, the second region 370b may overlap only the first extending portion 361a of the first flexible printed circuit board 361. According to an embodiment, when viewed from above the first battery 341, the second region 370b may overlap only one of a plurality of tapes 350 and the first flexible printed circuit board 361. For example, when viewed from above the first battery 341, a portion of the second region 370b may overlap the plurality of tapes 350 and may not overlap the first flexible printed circuit board 361. For example, when viewed from above the first battery 341, another portion of the second region 370b may overlap the first flexible printed circuit board 361 and may not overlap the plurality of tapes 350.

According to an embodiment, the antenna module 370 may include a first coverlay 371, a first conductive layer 372, a non-conductive layer 373, a second conductive layer 374, and/or a second coverlay 375. The first coverlay 371 may protect layers 372, 373, 374, and 375 included in the antenna module 370. The first coverlay 371 may include insulating material.

The first conductive layer 372 may form a signal pattern of the antenna module 370. For example, the first conductive layer 372 may transmit or receive a signal for communication with the outside of the electronic device 300. For example, the first conductive layer 372 may receive power from the outside of the electronic device 300 or transmit the power to the outside of the electronic device 300. For example, the first conductive layer 372 may include conductive material. According to an embodiment, the first conductive layer 372 may be disposed on the first coverlay 371. For example, the first conductive layer 372 may be in contact with a surface of the first coverlay 371.

The non-conductive layer 373 may be disposed on the first conductive layer 372. For example, the non-conductive layer 373 may be in contact with a surface of the first conductive layer 372. According to an embodiment, the non-conductive layer 373 may electrically separate the first conductive layer 372 and the second conductive layer 374. For example, the non-conductive layer 373 may include non-conductive material. The non-conductive layer 373 may be interposed between the first conductive layer 372 and the second conductive layer 374.

The second conductive layer 374 may form the signal pattern of the antenna module 370. For example, the second conductive layer 374 may transmit or receive the signal for communication with the outside of the electronic device 300. For example, the second conductive layer 374 may receive the power from the outside of the electronic device 300 or transmit the power to the outside of the electronic device 300. For example, the second conductive layer 374 may include a conductive material. According to an embodiment, the second conductive layer 374 may be disposed on the non-conductive layer 373. For example, the second conductive layer 374 may be in contact with a surface of the non-conductive layer 373. According to an embodiment, the second conductive layer 374 may be disposed only in the second region 370b among the first region 370a and the second region 370b. The second conductive layer 374 may not be disposed in the first region 370a. According to an embodiment, the second conductive layer 374 may be electrically connected to the first conductive layer 372 through a conductive via.

The second coverlay 375 may protect the layers 372, 373, 374, and 375 included in the antenna module 370. For example, the second coverlay 375 may include a non-conductive material. According to an embodiment, the second coverlay 375 may be disposed on the non-conductive layer 373. For example, in the first area 370a, the second coverlay 375 may be in contact with the surface of the non-conductive layer 373. For example, in the second area 370b, the second coverlay 375 may be disposed on the second conductive layer 374 disposed on the non-conductive layer 373. For example, in the second area 370b, the second coverlay 375 may be in contact with a surface of the second conductive layer 374.

According to an embodiment, the second region 370b may have a thickness thicker than the first region 370a. For example, the number of conductive layers included in the first region 370a may be smaller than the number of conductive layers included in the second region 370b. For example, the second region 370b may include the first conductive layer 372 and the second conductive layer 374, and the first region 370a may include only the first conductive layer 372. Unlike the second region 370b, the first region 370a may overlap both the plurality of tapes 350 and the first flexible printed circuit board 361. For example, the first region 370a may overlap the second tape 352 and the first flexible printed circuit board 361 on the third periphery 341c of the first battery 341. In case that the thickness of the first region 370a and the thickness of the second region 370b are the same, due to a thickness of the second tape 352, a space for disposing the first battery 341 in the electronic device 300 may be reduced. As the space for disposing the first battery 341 is reduced, a thickness of the first battery 341 may be reduced. When the thickness of the first battery 341 is reduced, as a capacity of the first battery 341 is reduced, convenience of the electronic device 300 may be reduced. Since the thickness of the first region 370a of the antenna module 370 is thinner than the thickness of the second region 370b of the antenna module 370, the electronic device 300 according to an embodiment may provide a structure in which the thickness of the first battery 341 may increase.

As described above, the electronic device 300 according to an embodiment may provide the structure in which the thickness of the first battery 341 may increase by the first region 370a having the thickness thinner than the second region 370b.

Meanwhile, in FIG. 6B, it was illustrated that the antenna module 370 included the first coverlay 371, the first conductive layer 372, the non-conductive layer 373, the second conductive layer 374, and the second coverlay 375, but this is for convenience of explanation. According to embodiments, the antenna module 370 may further include a shielding layer for shielding an electromagnetic wave.

Various components of an electronic device may be disposed adjacent to each other in a limited space in the electronic device, by miniaturizing the electronic device to enhance a user portability. As the various components are adjacent to each other in the electronic device, the components may overlap each other. For example, in case that a battery and other electronic components overlap in the electronic device, a thickness of the battery disposed in the electronic device may be reduced. When the thickness of the battery is reduced, as a capacity of the battery is reduced, the electronic device may not provide various functions to a user. The electronic device may need a structure capable of increasing a size of the battery to enhance user convenience.

According to an embodiment, an electronic device (e.g., the electronic device 300 of FIG. 3A) may include a first housing (e.g., the first housing 310 of FIG. 3A). According to an embodiment, the electronic device may include a second housing (e.g., the second housing 320 of FIG. 3A) rotatable relative to the first housing. According to an embodiment, the electronic device may include a hinge structure (e.g., the hinge structure 250 of FIGS. 2A, 2B, and 2C) disposed between the first housing and the second housing, and coupling the first housing and the second housing. According to an embodiment, the electronic device may include a flexible display (e.g., the display 230 of FIGS. 2A, 2B, and 2C), across the hinge structure, disposed on a surface (e.g., the first surface 311 of FIG. 3A) of the first housing and a surface (e.g., the third surface 321 of FIG. 3A) of the second housing and foldable by moving of the second housing relative to the first housing. According to an embodiment, the electronic device may include a first printed circuit board (e.g., the first printed circuit board 331 of FIG. 3A) disposed within the first housing. According to an embodiment, the electronic device may include a second printed circuit board (e.g., the second printed circuit board 332 of FIG. 3A) disposed within the second housing. According to an embodiment, the electronic device may include a battery (e.g., the first battery 341 of FIGS. 3A and 3B) including a first periphery (e.g., the first periphery 341a of FIG. 3A), a second periphery (e.g., the second periphery 341b of FIG. 3A) connected to an ending portion of the first periphery, and a third periphery (e.g., the third periphery 341c of FIG. 3A) connected to another ending portion of the second periphery, and disposed in the first housing. According to an embodiment, the electronic device may include a first flexible printed circuit board (e.g., the first flexible printed circuit board 361 of FIGS. 3A and 3B) electrically connecting the first printed circuit board and the second printed circuit board, and wherein a portion of the first flexible printed circuit board overlaps on a portion (e.g., the portion 341a-1 of a first periphery 341a of FIGS. 3A and 3B) of the first periphery. According to an embodiment, the electronic device may include a plurality of tapes (e.g., the plurality of tapes 350 of FIG. 3A) surrounding the battery. According to an embodiment, the plurality of tapes may include a first tape (e.g., the first tape 351 of FIG. 3A) in contact with the second periphery. According to an embodiment, the plurality of tapes may include a second tape (e.g., the second tape 352 of FIG. 3A) in contact with the third periphery. According to an embodiment, the portion of the first periphery may be disposed between the first tape and the second tape, and face the first printed circuit board through a gap (e.g., the gap g1 of FIG. 3B) between the first tape and the second tape.

According to an embodiment, since a portion of a first periphery faces a first flexible printed circuit board through the gap between a first tape and a second tape, the electronic device may provide a structure in which a size of a battery is increased.

According to an embodiment, the plurality of tapes may include a third tape (e.g., the third tape 353 of FIG. 3A) surrounding a corner of the first battery where the first periphery and the second periphery are in contact with each other, and in contact with the first tape. According to an embodiment, the plurality of tapes may include a fourth tape (e.g., the fourth tape 354 of FIG. 3A), spaced apart from the second tape when viewed from above the battery, and in contact with another portion (e.g., another portion 341a-2 of the first periphery 341a of FIG. 3A) of the first periphery. According to an embodiment, the first flexible printed circuit board may be disposed between the third tape and the fourth tape.

According to an embodiment, since a first flexible printed circuit board is disposed between the third tape and the fourth tape, the electronic device may provide a structure in which a first flexible printed circuit board and a plurality of tapes are spaced apart. As the first flexible printed circuit board and the plurality of tapes are spaced apart, the electronic device may provide the structure in which the size of the battery is increased.

According to an embodiment, a portion of the second tape may be in contact with a side surface (e.g., the side surface 341f of FIG. 4B) of the battery facing the first printed circuit board. According to an embodiment, the fourth tape may be in contact with an outer surface of the second tape.

According to an embodiment, since the fourth tape and the second tape overlap on a side surface of a battery, the electronic device may provide a structure capable of increasing the size of the battery, while sealing the battery.

According to an embodiment, the electronic device may include an antenna module (e.g., an antenna module 370 of FIGS. 6A and 6B) disposed on a surface of the battery. According to an embodiment, the antenna module may include a first region (e.g., the first region 370a of FIGS. 6A and 6B) that is disposed on another portion of the first flexible printed circuit board overlapping the third periphery. According to an embodiment, the antenna module may include a second region (e.g., the second region 370b of FIGS. 6A and 6B) connected to the first region, and having a thickness thicker than the first region.

According to an embodiment, the electronic device may provide a structure in which a thickness of a battery may increase by the first region having a thickness thinner than the second region.

According to an embodiment, the number of conductive layers (e.g., the first conductive layer 372 and the second conductive layer 374 of FIG. 6B) included in the first region may be smaller than the number of conductive layers included in the second region.

According to an embodiment, the electronic device may provide a structure in which the thickness of a battery may increase by the first region having the thickness thinner than the second region.

According to an embodiment, the first flexible printed circuit board may include a first extending portion (e.g., the first extending portion 361a of FIG. 5A) extending on a surface of the battery along a direction perpendicular to the first periphery. According to an embodiment, the first flexible printed circuit board may include a second extending portion (e.g., the second extending portion 361b of FIG. 5A) extending perpendicularly to the first extending portion. According to an embodiment, the first flexible printed circuit board may include a third extending portion (e.g., the third extending portion 361c of FIG. 5A) extending perpendicularly to the first extending portion, and spaced apart from the second extending portion.

According to an embodiment, the electronic device may provide a structure in which the first flexible printed circuit board may be stably supported through the second extending portion fixed to the first housing.

According to an embodiment, an ending portion of the second extending portion may be fixed to the first housing.

According to an embodiment, the electronic device may provide the structure in which the first flexible printed circuit board may be stably supported through the second extending portion fixed to the first housing.

According to an embodiment, the third extending portion may extend to the second housing via a through hole (e.g., the through hole 310a of FIGS. 6A and 6B) penetrating the first housing.

According to an embodiment, as the first housing includes a through hole, the first printed circuit board and the second printed circuit board may be electrically connected through the first flexible printed circuit board.

According to an embodiment, the electronic device may include a third printed circuit board (e.g., the third printed circuit board 333 of FIG. 3A) disposed within the first housing. According to an embodiment, the electronic device may include a second flexible printed circuit board (e.g., the second flexible printed circuit board 362 of FIG. 3A) extending between the first printed circuit board and the third printed circuit board across the battery. According to an embodiment, the portion of the first periphery may face the second flexible printed circuit board through a gap between the first tape and the second tape.

According to an embodiment, since the portion of the first periphery faces the second flexible printed circuit board through the gap between the first tape and the second tape, the electronic device may provide the structure in which the size of the battery is increased.

According to an embodiment, the battery may include a fourth periphery (e.g., the fourth periphery 341d of FIG. 3A) opposite to the first periphery. According to an embodiment, a portion of the fourth periphery may face the second flexible printed circuit board through the gap between the first tape and the second tape.

According to an embodiment, since the portion of a fourth periphery faces the second flexible printed circuit board through the gap between the first tape and the second tape, the electronic device may provide the structure in which the size of the battery is increased.

According to an embodiment, the second flexible printed circuit board may extend from the first printed circuit board to the third printed circuit board along a direction perpendicular to the first periphery.

According to an embodiment, the first printed circuit board may include a processor (e.g., the processor 120 of FIG. 1) disposed on a surface of the first printed circuit board.

According to an embodiment, the plurality of tapes may be informed by an insulating material.

According to an embodiment, the electronic device may provide a structure capable of preventing a short circuit of the battery through the plurality of tapes surrounding the battery.

According to an embodiment, the first periphery may face a side surface of the first printed circuit board.

According to an embodiment, the first flexible printed circuit board may cover the first periphery and the third periphery, and may be spaced apart from the second periphery.

According to an embodiment, an electronic device (e.g., the electronic device 300 of FIG. 3A) may include a housing (e.g., the first housing 310 of FIG. 3A). According to an embodiment, the electronic device may include a first printed circuit board (e.g., the first printed circuit board 331 of FIG. 3A) disposed within the housing. According to an embodiment, the electronic device may include a second printed circuit board (e.g., the third printed circuit board 333 of FIG. 3A) disposed within the housing, and spaced apart from the first printed circuit board. According to an embodiment, the electronic device may include a battery (e.g., the first battery 341 of FIGS. 3A and 3B) including a first periphery (e.g., the first periphery 341a of FIG. 3A), a second periphery (e.g., the second periphery 341b of FIG. 3A) perpendicular to the first periphery, and a third periphery (e.g., the third periphery 341c of FIG. 3A) parallel to the second periphery, and disposed between the first printed circuit board and the second printed circuit board. According to an embodiment, the electronic device may include a flexible printed circuit board (e.g., the second flexible printed circuit board 362 of FIG. 3A) electrically connecting the first printed circuit board and the second printed circuit board, and wherein a portion of the first printed circuit board is disposed on a portion (e.g., the portion 341a-1 of the first periphery 341a of FIG. 3A) of the first periphery. According to an embodiment, the electronic device may include a plurality of tapes (e.g., the plurality of tapes 350 of FIG. 3A) surrounding the battery. According to an embodiment, the plurality of tapes may include a first tape (e.g., the first tape 351 of FIG. 3A) extending along the second periphery. According to an embodiment, the plurality of tapes may include a second tape (e.g., the second tape 352 of FIG. 3A) extending along the third periphery. According to an embodiment, the portion of the first periphery may be disposed between the first tape and the second tape, and face the flexible printed circuit board through a gap between the first tape and the second tape.

According to an embodiment, since the portion of the first periphery faces the flexible printed circuit board through the gap between the first tape and the second tape, the electronic device may provide a structure in which a size of a battery is increased.

According to an embodiment, the plurality of tapes may include a third tape (e.g., the third tape 353 of FIG. 3A), surrounding an ending portion of the second periphery in contact with the first periphery, and disposed on the first tape. According to an embodiment, the plurality of tapes may include a fourth tape (e.g., the fourth tape 354 of FIG. 3A), spaced apart from the second tape when viewed from above the battery, and surrounding another portion (e.g., another portion 341a-2 of the first periphery 341a of FIG. 3A) of the first periphery. According to an embodiment, the flexible printed circuit board may be disposed between the third tape and the fourth tape.

According to an embodiment, since a first flexible printed circuit board is disposed between the third tape and the fourth tape, the electronic device may provide a structure in which the first flexible printed circuit board and the plurality of tapes are spaced apart. As the first flexible printed circuit board and the plurality of tapes are spaced apart, the electronic device may provide a structure in which the size of the battery is increased.

According to an embodiment, the flexible printed circuit board may extend, across the battery, on a surface (e.g., the surface 341e of FIG. 3A) of the battery.

According to an embodiment, the battery may include a fourth periphery (e.g., the fourth periphery 341d of FIG. 3A) opposite to the first periphery. According to an embodiment, a portion of the fourth periphery may face the flexible printed circuit board through the gap between the first tape and the second tape.

According to an embodiment, since the portion of the fourth periphery faces a second flexible printed circuit board through the gap between the first tape and the second tape, the electronic device may provide the structure in which the size of the battery is increased.

According to an embodiment, when viewed from above the battery, the flexible printed circuit board may overlap the first periphery. According to an embodiment, the flexible printed circuit board may be spaced apart from the second periphery, and the third periphery.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300) comprising:
a battery (341), wherein a surface (341e) of the battery (341) includes a first periphery region (341a), a second periphery region (341b) extending perpendicularly to the first periphery region (341a), and a third periphery region (341c) extending parallel to the second periphery region (341b);
a first printed circuit board, PCB, (331) spaced apart from the battery in a first direction;
a second PCB (332; 333) spaced apart from the battery (341) in a second direction different from the first direction;
a first flexible PCB, FPCB, (361; 362) extending from the first PCB (331) to the second PCB (332; 333); and
a plurality of tapes (350) surrounding the battery (341) the plurality of tapes (350) including:
a first tape (351) extending along the second periphery region (341b), and
a second tape (352) extending along the third periphery region (341c); and
wherein a portion of the first FPCB (361; 362) is disposed on a portion of the first periphery region (341a) which is disposed between the first tape (351) and the second tape (352) and on which the plurality of tapes (350) are not disposed.

2. The electronic device (101; 200; 300) of claim 1,
wherein the plurality of tapes (350) further includes:
a third tape (353), surrounding an ending portion of the second periphery region (341b) in contact with the first periphery region (341a), and disposed on the first tape (351); and
a fourth tape (354), spaced apart from the second tape (352) when viewed from above the battery (341), and surrounding another portion of the first periphery region (341a); and
wherein the first FPCB (361; 362) is disposed between the third tape (353) and the fourth tape (354).

3. The electronic device (101; 200; 300) of any one of claim 1 and claim 2,
wherein:
a portion of the second tape (352) surrounds a side surface of the battery (341) facing the first PCB (331);
the fourth tape (354) surrounds the portion of the second tape (352).

4. The electronic device (101; 200; 300) of any one of claims 1 to 3, comprising an antenna module (370) disposed on a surface of the battery (341), the antenna module (370) including:
a first region (370a) overlapping another portion of the first FPCB (361; 362) that is disposed on the third periphery region (341c); and
a second region(370b), connected to the first region (370a), and having a thickness thicker than the first region (370a).

5. The electronic device (101; 200; 300) of any one of claims 1 to 4,
a number of conductive layers included in the first region (370a) is smaller than a number of conductive layers included in the second region(370b).

6. The electronic device (101; 200; 300) of any one of claims 1 to 5,
wherein the first FPCB (361; 362) includes:
a first extending portion (361a) extending on a surface of the battery (341) along a direction perpendicular to the first periphery region (341a);
a second extending portion (361b) extending from the first extending portion (361a) toward the third periphery region (341c); and
a third extending portion (361c), extending from the first extending portion (361a) toward the third periphery region (341c), and spaced apart from the second extending portion (361b).

7. The electronic device (101; 200; 300) of claim 6, comprising:
a first housing (210; 310) accommodating the first PCB (331); and
a second housing (220; 320), accommodating the second PCB (332; 333), and movable relative to the first housing (210; 310), and
wherein an ending portion of the second extending portion (361b) is coupled to the first housing (210; 310).

8. The electronic device (101; 200; 300) of claim 7,
wherein the third extending portion (361c) extends to the second housing (220; 320) via a through hole penetrating the first housing (210; 310).

9. The electronic device (101; 200; 300) of any one of claims 1 to 8, further comprising:
a first housing (210; 310) accommodating the first PCB (331);
a second housing (220; 320), accommodating the second PCB (332; 333), and movable relative to the first housing (210; 310);
a third PCB disposed within the first housing (210; 310); and
a second FPCB (362) connecting the first PCB (331) and the third PCB across the battery (341), and
wherein the portion of the first periphery region (341a) faces the second FPCB (362) through a gap between the first tape (351) and the second tape (352).

10. The electronic device (101; 200; 300) of claim 9,
wherein the surface (341e) of the battery (341) further includes a fourth periphery region opposite to the first periphery region (341a), and
wherein a portion of the fourth periphery region faces the second FPCB (362) through a gap between the first tape (351) and the second tape (352).

11. The electronic device (101; 200; 300) of claim 9,
wherein the second FPCB (362) extends from the first PCB (331) to the third PCB along a direction perpendicular to the first periphery region (341a).

12. The electronic device (101; 200; 300) of any one of claims 1 to 11,
wherein the first PCB (331) includes a processor disposed on a surface of the first PCB (331).

13. The electronic device (101; 200; 300) of any one of claims 1 to 12,
wherein the plurality of tapes (350) includes an insulating material.

14. The electronic device (101; 200; 300) of any one of claims 1 to 13,
wherein the first periphery region (341a) faces a side surface of the first PCB (331).

15. The electronic device (101; 200; 300) of any one of claims 1 to 14,
wherein, when viewed from above the battery (341), the first FPCB (361; 362) overlaps the first periphery region (341a) and the third periphery region (341c), and is spaced apart from t he second periphery region (341b).

## Patentansprüche

1. Elektronische Vorrichtung (101; 200; 300), umfassend:
eine Batterie (341), wobei eine Oberfläche (341e) der Batterie (341) einen ersten Umfangsbereich (341a), einen zweiten Umfangsbereich (341b), der sich senkrecht zu dem ersten Umfangsbereich (341a) erstreckt, und einen dritten Umfangsbereich (341c), der sich parallel zu dem zweiten Umfangsbereich (341b) erstreckt, beinhaltet;
eine erste Leiterplatte, PCB, (331), die von der Batterie in einer ersten Richtung beabstandet ist;
eine zweite PCB (332; 333), die von der Batterie (341) in einer zweiten Richtung, die sich von der ersten Richtung unterscheidet, beabstandet ist;
eine erste flexible PCB, FPCB, (361; 362), die sich von der ersten PCB (331) zu der zweiten PCB (332; 333) erstreckt; und
eine Vielzahl von Bändern (350), welche die Batterie (341) umhüllt, wobei die Vielzahl von Bändern (350) Folgendes beinhaltet:
ein erstes Band (351), das sich entlang des zweiten Umfangsbereichs (341b) erstreckt, und
ein zweites Band (352), das sich entlang des dritten Umfangsbereichs (341c) erstreckt; und
wobei ein Abschnitt der ersten FPCB (361; 362) an einem Abschnitt des ersten Umfangsbereichs (341a) angeordnet ist, der zwischen dem ersten Band (351) und dem zweiten Band (352) angeordnet ist und an dem die Vielzahl von Bändern (350) nicht angeordnet ist.

2. Elektronische Vorrichtung (101; 200; 300) nach Anspruch 1,
wobei die Vielzahl von Bändern (350) ferner Folgendes beinhaltet:
ein drittes Band (353), das einen Endabschnitt des zweiten Umfangsbereichs (341b) in Kontakt mit dem ersten Umfangsbereich (341a) umhüllt und an dem ersten Band (351) angeordnet ist; und
ein viertes Band (354), beabstandet von dem zweiten Band (352), wenn von oberhalb der Batterie (341) betrachtet, und einen anderen Abschnitt des ersten Umfangsbereichs (341a) umhüllend; und
wobei die erste FPCB (361; 362) zwischen dem dritten Band (353) und dem vierten Band (354) angeordnet ist.

3. Elektronische Vorrichtung (101; 200; 300) nach einem von Anspruch 1 und Anspruch 2,
wobei:
ein Abschnitt des zweiten Bands (352) eine Seitenoberfläche der Batterie (341), die der ersten Leiterplatte (331) zugewandt ist, umhüllt;
das vierte Band (354) den Abschnitt des zweiten Bands (352) umhüllt.

4. Elektronische Vorrichtung (101; 200; 300) nach einem der Ansprüche 1 bis 3, umfassend ein Antennenmodul (370), das auf einer Oberfläche der Batterie (341) angeordnet ist, wobei das Antennenmodul (370) Folgendes beinhaltet:
einen ersten Bereich (370a), der einen anderen Abschnitt der ersten FPCB (361; 362), der an dem dritten Umfangsbereich (341c) angeordnet ist, überlappt; und
einen zweiten Bereich (370b), der mit dem ersten Bereich (370a) verbunden ist und eine Dicke aufweist, die dicker als der erste Bereich (370a) ist.

5. Elektronische Vorrichtung (101; 200; 300) nach einem der Ansprüche 1 bis 4,
wobei eine Anzahl an leitenden Schichten, die in dem ersten Bereich (370a) beinhaltet ist, kleiner als eine Anzahl an leitenden Schichten ist, die in dem zweiten Bereich (370b) beinhaltet ist.

6. Elektronische Vorrichtung (101; 200; 300) nach einem der Ansprüche 1 bis 5,
wobei die erste FPCB (361; 362) Folgendes beinhaltet:
einen ersten Erstreckungsabschnitt (361a), der sich auf einer Oberfläche der Batterie (341) entlang einer Richtung senkrecht zu dem ersten Umfangsbereich (341a) erstreckt;
einen zweiten Erstreckungsabschnitt (361b), der sich von dem ersten Erstreckungsabschnitt (361a) zu dem dritten Umfangsbereich (341c) erstreckt; und
einen dritten Erstreckungsabschnitt (361c), der sich von dem ersten Erstreckungsabschnitt (361a) zu dem dritten Umfangsbereich (341c) erstreckt und von dem zweiten Erstreckungsabschnitt (361b) beabstandet ist.

7. Elektronische Vorrichtung (101; 200; 300) nach Anspruch 6, umfassend:
ein erstes Gehäuse (210; 310), das die erste PCB (331) aufnimmt; und
ein zweites Gehäuse (220; 320), das die zweite PCB (332; 333) aufnimmt und relativ zu dem ersten Gehäuse (210; 310) bewegbar ist, und
wobei ein Endabschnitt des zweiten Erstreckungsabschnittes (361b) an das erste Gehäuse (210; 310) gekoppelt ist.

8. Elektronische Vorrichtung (101; 200; 300) nach Anspruch 7,
wobei sich der dritte Erstreckungsabschnitt (361c) zu dem zweiten Gehäuse (220; 320) über ein Durchgangsloch erstreckt, welches das erste Gehäuse (210; 310) durchdringt.

9. Elektronische Vorrichtung (101; 200; 300) nach einem der Ansprüche 1 bis 8, ferner umfassend:
ein erstes Gehäuse (210; 310), das die erste PCB (331) aufnimmt;
ein zweites Gehäuse (220; 320), das die zweite PCB (332; 333) aufnimmt und relativ zu dem ersten Gehäuse (210; 310) bewegbar ist;
eine dritte PCB, die innerhalb des ersten Gehäuses (210; 310) angeordnet ist; und
eine zweite FPCB (362), welche die erste PCB (331) und die dritte PCB über die Batterie (341) verbindet, und
wobei der Abschnitt des ersten Umfangsbereichs (341a) der zweiten FPCB (362) durch einen Spalt zwischen dem ersten Band (351) und dem zweiten Band (352) zugewandt ist.

10. Elektronische Vorrichtung (101; 200; 300) nach Anspruch 9,
wobei die Oberfläche (341e) der Batterie (341) ferner einen vierten Umfangsbereich gegenüber dem ersten Umfangsbereich (341a) beinhaltet, und
wobei ein Abschnitt des vierten Umfangsbereichs der zweiten FPCB (362) durch einen Spalt zwischen dem ersten Band (351) und dem zweiten Band (352) zugewandt ist.

11. Elektronische Vorrichtung (101; 200; 300) nach Anspruch 9,
wobei sich die zweite FPCB (362) von der ersten PCB (331) zu der dritten PCB entlang einer Richtung senkrecht zu dem ersten Umfangsbereich (341a) erstreckt.

12. Elektronische Vorrichtung (101; 200; 300) nach einem der Ansprüche 1 bis 11,
wobei die erste PCB (331) einen Prozessor beinhaltet, der auf einer Oberfläche der ersten PCB (331) angeordnet ist.

13. Elektronische Vorrichtung (101; 200; 300) nach einem der Ansprüche 1 bis 12,
wobei die Vielzahl von Bändern (350) ein Isoliermaterial beinhaltet.

14. Elektronische Vorrichtung (101; 200; 300) nach einem der Ansprüche 1 bis 13,
wobei der erste Umfangsbereich (341a) einer Seitenoberfläche der ersten PCB (331) zugewandt ist.

15. Elektronische Vorrichtung (101; 200; 300) nach einem der Ansprüche 1 bis 14,
wobei, wenn von oberhalb der Batterie (341) betrachtet, die erste FPCB (361; 362) den ersten Umfangsbereich (341a) und den dritten Umfangsbereich (341c) überlappt und von dem zweiten Umfangsbereich (341b) beabstandet ist.

## Revendications

1. Dispositif électronique (101 ; 200 ; 300) comprenant :
une batterie (341), une surface (341e) de la batterie (341) comprenant une première zone périphérique (341a), une deuxième zone périphérique (341b) s'étendant perpendiculairement à la première zone périphérique (341a) et une troisième zone périphérique (341c) s'étendant parallèlement à la deuxième zone périphérique (341b) ;
une première carte de circuit imprimé, PCB, (331) espacée de la batterie dans une première direction ;
une deuxième PCB (332 ; 333) espacée de la batterie (341) dans une seconde direction différente de la première direction ;
une première PCB souple, FPCB, (361 ; 362) s'étendant à partir de la première PCB (331) vers la deuxième PCB (332 ; 333) ; et
une pluralité de bandes (350) entourant la batterie (341), la pluralité de bandes (350) comprenant :
une première bande (351) s'étendant le long de la deuxième zone périphérique (341b), et
une deuxième bande (352) s'étendant le long de la troisième zone périphérique (341c) ; et
une partie de la première FPCB (361 ; 362) étant disposée sur une partie de la première zone périphérique (341a) qui est disposée entre la première bande (351) et la deuxième bande (352)
et sur laquelle la pluralité de bandes (350) ne sont pas disposées.

2. Dispositif électronique (101 ; 200 ; 300) de la revendication 1,
ladite pluralité de bandes (350) comprenant en outre :
une troisième bande (353), entourant une partie d'extrémité de la deuxième zone périphérique (341b) en contact avec la première zone périphérique (341a), et disposée sur la première bande (351) ; et
une quatrième bande (354), espacée de la deuxième bande (352) lorsqu'elle est vue de dessus la batterie (341), et entourant une autre partie de la première zone périphérique (341a) ; et
ladite première FPCB (361 ; 362) étant disposée entre la troisième bande (353) et la quatrième bande (354).

3. Dispositif électronique (101 ; 200 ; 300) de l'une quelconque de la revendication 1 et de la revendication 2,
une partie de la deuxième bande (352) entourant une surface latérale de la batterie (341) faisant face à la première PCB (331) ;
ladite quatrième bande (354) entourant la partie de la deuxième bande (352).

4. Dispositif électronique (101 ; 200 ; 300) de l'une quelconque des revendications 1 à 3, comprenant un module d'antenne (370) disposé sur une surface de la batterie (341), ledit module d'antenne (370) comprenant :
une première zone (370a) chevauchant une autre partie de la première FPCB (361 ; 362) qui est disposée sur la troisième zone périphérique (341c) ; et
une seconde zone (370b), reliée à la première zone (370a), et présentant une épaisseur plus grande que la première zone (370a).

5. Dispositif électronique (101 ; 200 ; 300) de l'une quelconque des revendications 1 à 4,
un nombre de couches conductrices comprises dans la première zone (370a) étant inférieur à un nombre de couches conductrices comprises dans la seconde zone (370b).

6. Dispositif électronique (101 ; 200 ; 300) de l'une quelconque des revendications 1 à 5,
ladite première FPCB (361 ; 362) comprenant :
une première partie d'extension (361a) s'étendant sur une surface de la batterie (341) le long d'une direction perpendiculaire à la première zone périphérique (341a) ;
une deuxième partie d'extension (361b) s'étendant à partir de la première partie d'extension (361a) vers la troisième zone périphérique (341c) ; et
une troisième partie d'extension (361c), s'étendant à partir de la première partie d'extension (361a) vers la troisième zone périphérique (341c), et étant espacée de la deuxième partie d'extension (361b).

7. Dispositif électronique (101 ; 200 ; 300) de la revendication 6, comprenant :
un premier boîtier (210 ; 310) recevant la première PCB (331) ; et
un second boîtier (220 ; 320), recevant la deuxième PCB (332 ; 333), et mobile par rapport au premier boîtier (210 ; 310), et
une partie d'extrémité de la deuxième partie d'extension (361b) étant couplée au premier boîtier (210 ; 310).

8. Dispositif électronique (101 ; 200 ; 300) de la revendication 7,
ladite troisième partie d'extension (361c) s'étendant vers le second boîtier (220 ; 320) par l'intermédiaire d'un trou traversant pénétrant le premier boîtier (210 ; 310).

9. Dispositif électronique (101 ; 200 ; 300) de l'une quelconque des revendications 1 à 8, comprenant en outre :
un premier boîtier (210 ; 310) recevant la première PCB (331) ;
un second boîtier (220 ; 320), recevant la deuxième PCB (332 ; 333), et mobile par rapport au premier boîtier (210 ; 310) ;
une troisième PCB disposée à l'intérieur du premier boîtier (210 ; 310) ; et
un seconde FPCB (362) connectant la première PCB (331) et la troisième PCB à travers la batterie (341), et
ladite partie de la première zone périphérique (341a) faisant face à la seconde FPCB (362) à travers un espace entre la première bande (351) et la deuxième bande (352).

10. Dispositif électronique (101 ; 200 ; 300) de la revendication 9,
ladite surface (341e) de la batterie (341) comprenant en outre une quatrième zone périphérique opposée à la première zone périphérique (341a), et
une partie de la quatrième zone périphérique faisant face à la seconde FPCB (362) à travers un espace entre la première bande (351) et la deuxième bande (352).

11. Dispositif électronique (101 ; 200 ; 300) de la revendication 9,
ladite seconde FPCB (362) s'étendant à partir de la première PCB (331) jusqu'à la troisième PCB le long d'une direction perpendiculaire à la première zone périphérique (341a).

12. Dispositif électronique (101 ; 200 ; 300) de l'une quelconque des revendications 1 à 11,
ladite première PCB (331) comprenant un processeur disposé sur une surface de la première PCB (331).

13. Dispositif électronique (101 ; 200 ; 300) de l'une quelconque des revendications 1 à 12,
ladite pluralité de bandes (350) comprenant un matériau isolant.

14. Dispositif électronique (101 ; 200 ; 300) de l'une quelconque des revendications 1 à 13,
ladite première zone périphérique (341a) faisant face à une surface latérale de la première PCB (331).

15. Dispositif électronique (101 ; 200 ; 300) de l'une quelconque des revendications 1 à 14,
lorsqu'elle est vue de dessus la batterie (341), ladite première FPCB (361 ; 362) chevauchant la première zone périphérique (341a) et la troisième zone périphérique (341c), et étant espacée de la deuxième zone périphérique (341b).
